# EUROPEAN PATENT SPECIFICATION

(11) **EP 4 461 867 B1**
(45) Date of publication and mention of the grant of the patent: **05.08.2026**
(21) Application number: 23824043.6
(22) Date of filing: 15.03.2023
(51) Int. Cl.: D06F 37/24, D06F 37/20, D06F 37/30, D06F 39/08, F16F 15/36, D06F 34/16, D06F 34/22, D06F 39/06, D06F 33/48, D06F 33/40, D06F 33/36, D06F 23/04, D06F 103/38, D06F 105/08, D06F 105/46, D06F 103/18, D06F 105/48

(54) **WASHING APPARUTUS AND CONTROLLING METHOD THEREOF**
WASCHVORRICHTUNG UND STEUERUNGSVERFAHREN DAFÜR
APPAREIL DE LAVAGE ET PROCÉDÉ DE COMMANDE DE CELUI-CI

(30) Priority: 15.06.2022 KR 20220073128
(43) Date of publication of application: 13.11.2024
(73) Proprietor: SAMSUNG ELECTRONICS CO., LTD., Yeongtong-gu Suwon-si, Gyeonggi-do 16677 (KR)
(72) Inventor: HONG, Jeonggi, Suwon-si Gyeonggi-do 16677 (KR); HAN, Wonjae, Suwon-si Gyeonggi-do 16677 (KR); KIM, Sungjong, Suwon-si Gyeonggi-do 16677 (KR); KIM, Hooijoong, Suwon-si Gyeonggi-do 16677 (KR); YOUN, Hansol, Suwon-si Gyeonggi-do 16677 (KR); JIN, Sooyeon, Suwon-si Gyeonggi-do 16677 (KR)
(74) Representative: Walaski, Jan Filip
(86) International application number: PCT/KR2023/003437
(87) International publication number: WO 2023/243813

(56) References cited:
- CN-A- 104 862 920
- JP-A- 2017 205 340
- KR-A- 19990 021 192
- KR-A- 20150 007 633
- KR-A- 20150 099 378
- US-A1- 2005 283 919
- US-A1- 2012 024 016
- US-B2- 10 066 333

## Description

### [Technical Field]

The present invention relates to the technical field of washing machines having a ball balancer for reducing vibration generated during a dehydrating cycle and methods of controlling the same.

### [Background Art]

A washing machine performs washing on laundry through a series of operations such as a washing cycle of separating pollutants from laundry with water (for example, wash water) in which detergent is dissolved, a rinsing cycle of rinsing foams or residual detergent with water (for example, rinsing water) containing no detergent, and a dehydrating cycle of removing moisture contained in the laundry with high velocity rotation.

When washing is performed through the series of operations, a rotating tub may be rotated in an unbalanced state in which a laundry is not evenly distributed in the rotating tub, in which case an eccentric force may be applied to a rotating shaft of the rotating tub, so that the rotating tub moves eccentrically and thus vibrations may be generated in the tub. The vibrations become severe when the rotating tub rotates at a high velocity for the dehydrating cycle, resulting in stronger vibrations and noise.

Accordingly, there has been continuous research on a washing machine equipped with a ball balancer capable of stabilizing rotation of a rotating tub by offsetting unbalanced load due to unbalance of laundry.

US 10066333 B2 discloses a washing machine with a ball balancer, and a method of controlling vibration reduction thereof. CN 104862920 A also discloses a washing machine with a ball balancer, and a method of controlling vibration reduction thereof. US 2005/283919 A1 discloses a method for controlling spinning in a drum-type washing machine.

### [Technical Problem]

One aspect of the invention provides a washing machine and a method of controlling the same that are capable of draining water in a process of entering a dehydrating cycle and when a predetermined water level is reached, starting the dehydrating cycle while a drain motor is in operation such that balls included in a ball balancer are located at a phase opposite to unbalance, thereby compensating for an imbalanced mass.

Another aspect of the invention provides a washing machine and a method of controlling the same that are capable of additionally draining water for a predetermined time, based on a washing motor being stopped after ball balancing is performed, so that foams generated during the ball balancing may be sufficiently discharged.

### [Technical Solution]

A washing machine, and a method of controlling a washing machine according to the independent claims is provided. Optional features are set out in the dependent claims.

### [Advantageous Effects]

As is apparent from the above, the washing machine according to an embodiment is implemented to compensate for an imbalance mass in an amount corresponding to a vector sum according to a mass and a position of balls included in a ball balancer, thereby suppressing excessive eccentricity. In addition, the washing machine is implemented to appropriately set a balancing RPM in consideration that the amount of foam generation, which is the cause of foam confinement, is proportional to a rotational RPM, and allocate an additional drainage time after a ball balancing in a state in which a motor is completely stopped, so that foam confinement can be prevented from occurring.

### [Description of Drawings]

FIG. 1 is a cross-sectional view illustrating a configuration of a washing machine having a ball balancer according to an embodiment.
FIG. 2 is a perspective view illustrating a ball balancer applied to a washing machine according to an embodiment.
FIG. 3 is a cross-sectional view taken along line I-I in FIG. 2;
FIG. 4 is a control block diagram illustrating a washing machine according to an embodiment.
FIG. 5 is a diagram illustrating a balanced state of laundry inside a rotating tub in a general washing machine.
FIG. 6 is a diagram illustrating an unbalanced state of laundry inside a rotating tub in a general washing machine.
FIG. 7 is a diagram illustrating a case in which balls and laundry are at the same phase in a washing machine having a ball balancer according to an embodiment.
FIG. 8 is a diagram illustrating a rotation velocity of a washing motor and a vibration displacement of a tub in a case of FIG. 7.
FIG. 9 is a diagram illustrating a case in which balls and laundry are at the opposite phases in a washing machine having a ball balancer according to an embodiment.
FIG. 10 is a diagram illustrating a rotation velocity of a washing motor and a vibration displacement of a tub in a case of FIG. 9.
FIG. 11 is a graph showing a ball balancing and an additional drainage in a washing machine according to an embodiment.
FIGS. 12 is a graph showing the amount of residual water, a vibration of a tub, and a rotation velocity of a washing motor over time in a washing machine according to an embodiment;
FIG. 13 is a cross-sectional view illustrating a configuration of a washing machine having a ball balancer according to another embodiment.
FIG. 14 is a flowchart showing a method of controlling a washing machine according to an embodiment.
FIG. 15 is a flow chart showing a method of controlling a washing machine according to an embodiment, which is subsequent to FIG. 14.

### [Modes of the Invention]

The embodiments described in the present specification and the configurations shown in the drawings are only examples of preferred embodiments, and various modifications may be made at the time of filing of the present specification to replace the embodiments and drawings of the present specification.

Identical symbols or numbers in the drawings of the present specification denote components or elements configured to perform substantially identical functions.

The singular expressions used herein may include plural expressions, unless the context clearly dictates otherwise. In addition, the terms "comprises" and "has" are intended to display that there are features, numbers, steps, operations, elements, parts, or combinations thereof described in the specification, and do not exclude the presence or addition of one or more other features, numbers, steps, operations, elements, parts, or combinations thereof.

It will be understood that, although the terms first, second, etc. may be used herein to describe various components, these components should not be limited by these terms. These terms are only used to differentiate one component from another. For example, without departing from the scope of the present specification, the first component may be referred to as a second component, and similarly, the second component may in addition be referred to as a first component. The term "and/or" includes combinations of one or all of a plurality of associated listed items.

The terms, such as "~ part", "~device", "~block", "~member", "~ module", and the like may refer to a unit for processing at least one function or act. For example, the terms may refer to at least process processed by at least one hardware, such as field-programmable gate array (FPGA)/ application specific integrated circuit (ASIC), software stored in memories, or processors.

Reference numerals used for method steps are just used for convenience of explanation, but not to limit an order of the steps. Thus, unless the context clearly dictates otherwise, the written order may be practiced otherwise.

Meanwhile, the disclosed embodiments may be embodied in the form of a recording medium storing instructions executable by a computer. The instructions may be stored in the form of program code and, when executed by a processor, may generate a program module to perform the operations of the disclosed embodiments. The recording medium may be embodied as a computer-readable recording medium.

Hereinafter, an embodiment of a washing machine and a method of controlling the same will be described in detail with reference to the accompanying drawings.

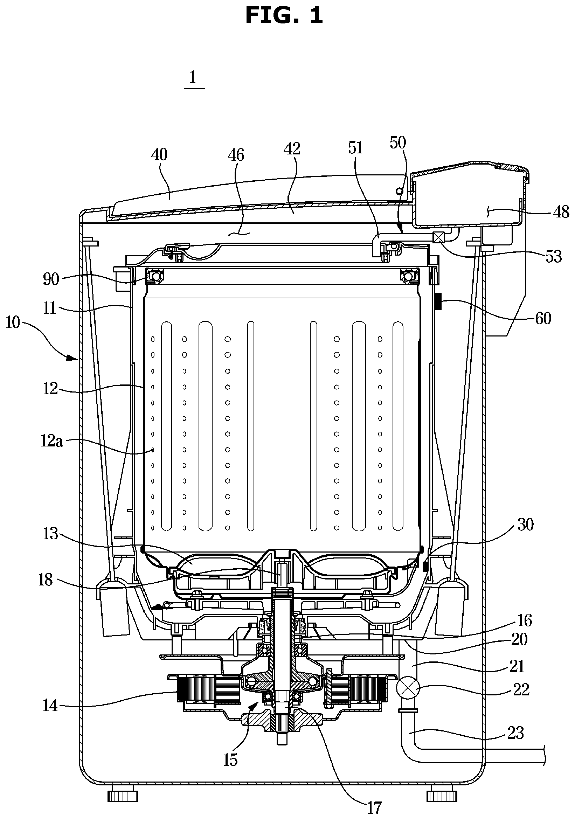

FIG. 1 is a cross-sectional view illustrating a configuration of a washing machine having a ball balancer according to an embodiment.

In FIG. 1, a washing machine 1 according to an embodiment of the invention includes a main body 10 forming the external appearance, a tub 11 installed inside the main body 10 to accommodate water (washing water or rinsing water) therein, a rotating tub 12 rotatably installed inside the tub 11 to accommodate laundry, a pulsator 13 rotatably installed inside the tub 12 to rotate leftward or rightward (forward rotation or backward rotation) to generate a water current, as a full automatic washing machine having a vertical axis.

The rotating tub 12 is provided in a cylindrical shape having an upper side that is open, and having a lateral side with a plurality of dehydrating holes 12a.

At a lower outer side of the tub 11, installed are a washing motor 14 generating a driving force to rotate the rotating tub 12 and the pulsator 13, and a power switching device 15 to simultaneously or selectively transmit the driving force generated from the washing motor 14 to the rotating tub 12 and the pulsator 13.

A hollow dehydrating shaft 16 is coupled to the rotating tub 12, and a washing shaft 17 installed in a hollow portion of the dehydrating shaft 16 is coupled to the pulsator 13 through a washing shaft coupling part 18.

The washing motor 14 is a direct drive (DD) motor having a variable velocity function, and the washing motor 14 may selectively transmit a driving force to the rotating tub 12 or the pulsator 13 according to ascending and descending of the power switch device 15.

In addition, the washing motor 14 may employ a universal motor including a field coil and an armature or a brushless direct (BLDC) motor including a stator and a rotor, and any one of motors applicable to the washing machine 1 may be allowed as the washing motor. In addition, the washing motor 14 may be provided as a belt type.

The tub 11 is provided on the bottom thereof with a drain hole 20 to discharge water from the tub 11 to the outside, and a first drain tube 21 is connected to the drain hole 20. A drain motor 22 for controlling drainage is installed on the first drain tube 21, and a second drain tube 23 for discharging water to the outside is connected to an outlet of the drain motor 22.

Instead of a drain motor 22 draining water being installed, a drain pump or drain valve may be installed instead.

In addition, at a lower inside of the tub 11, a water level sensor 30 for detect a frequency varying according to a water level is installed to detect the amount (the level) of water in the tub 11.

At an upper side of the main body 10, installed are a door 40 opening or closing to allow laundry inside the rotating tub 12 to be inserted into or withdrawn from the rotating tub 12, and a top cover 43 on which the door 25 is mounted.

The top cover 42 is provided with a laundry port44 to allow laundry to be inserted into or withdrawn from the rotating tub 12, and the laundry port 44 may be opened and closed by the door 40.

In addition, at a rear upper side of the main body 10, installed is a detergent box 48 supplying detergent and fabric softener and a water supply device 50 supplying water (washing water or rinsing water).

The water supply device 50 includes a water supply tube 51 connecting an external water supply tube and the detergent box 40 to supply water (washing water or rinsing water) into the tub 11, and a water supply valve 53 installed at an intermediate portion of the water supply tube 51 to control the supply of hot or cold water. With such a configuration, water supplied into the tub 11 is allowed to be supplied into the tub 11 via the detergent box 48 so that the detergent may be supplied to the tub 11together with the water.

At the upper outer side of the tub 11, installed is a vibration sensor 60 measuring vibrations of the tub 11 generated when the rotating tub 12 rotates eccentrically due to unbalanced laundry during a dehydrating cycle. The vibration sensor 60 may be provided using a micro electric mechanical system (MEMS) sensor for measuring the displacement of the tub 11 moving according to the vibrations of the tub 11, a three-axes direction acceleration sensor for measuring vibrations in three axes (a X-axis direction, a Y-axis direction, and a Z-axis) of the tub 11, and a gyro sensor that is an angular velocity sensor. In this case, a displacement signal measured by the vibration sensor 60 is generally used to estimate the balance state of laundry in the rotating tub 12 during acceleration from low velocity to high velocity to determine whether a high-velocity dehydrating operation is performed, to reduce the vibration of the tub 11 during the dehydrating cycle.

The vibration sensor 60 is illustrated as being installed at the upper outer side the tub 11, but the invention is not limited thereto, and the same object and effect may be achieved even when the vibration sensor 60 may be installed at the upper side of the main body 10 on which a control panel is installed, or may be installed at any place where vibrations of the tub 1 generated during the dehydrating cycle may be detected.

During a washing cycle or a rinsing cycle, the washing motor 14 rotates the rotating tub 12 in the forward direction and in the reverse directions at a low velocity so that the laundry accommodated in the rotating tub 12 rotates leftward and rightward along the inner wall of the rotating tub 12 while contaminants are removed from the laundry.

During a dehydrating cycle, the washing motor 14 rotates the rotating tub 12 in one direction at a high velocity, so that water is separated from the laundry by a centrifugal force acting on the laundry.

Upon unbalance in which laundry is not evenly distributed inside the rotating tub 12 and concentrated on a specific part during the rotation of the rotating tub 12 in the dehydrating operation, an one-sided force is applied to a rotating shaft, that is, the dehydrating shaft 16, so that strong vibration and noise are generated.

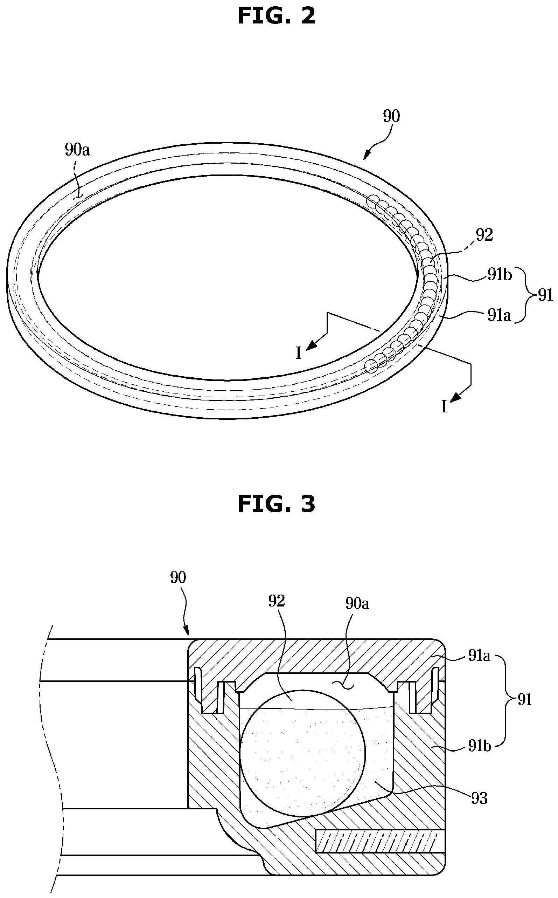

Therefore, the washing machine 1 according to an embodiment of the invention is provided with a ball balancer 90 at the upper side of the rotating tub 12 such that the rotating tub 12 may be stably rotated during the dehydrating cycle. Descriptions thereof will be made with reference to FIGS. 2 and 3.

FIG. 2 is a perspective view illustrating a ball balancer applied to a washing machine according to an embodiment, and FIG. 3 is a cross-sectional view taken along line I-I in FIG. 2;
Referring to FIGS. 2 and 3, the ball balancer 90 is formed in a circular ring shape and includes a balancer housing 91 provided inside thereof with a race 90a in a circular ring shape, a plurality of balls 92 movably installed inside the balancer housing 91, a viscous oil 93 formed to have a certain viscosity and filled to a certain level inside the race 90a. Accordingly, the plurality of balls 92 may move in the circumferential direction of the rotating tub 12 along the race 90a.

In the present embodiment, the balancer housing 91 includes a first balancer housing 91a and a second balancer housing 91b each formed in a circular ring shape and vertically coupled to each other to form the circular ring race 90atherebetween. The first balancer housing 91a is formed to have a U-shaped cross-section and forms an upper surface, an inner circumferential surface, and an outer circumferential surface of the race 90a, and the second balancer housing 91b covers the open upper side of the first balancer housing 91a to form the upper surface of the race 90a.

The race 90a, as described above, is formed in a circular ring shape and has a width and a height larger than a diameter of the balls 92, and guides the balls 92 to move in the circumferential direction according to the rotation of the rotating tub 12. The race 90a is formed to have a sufficient width in comparison to the diameter of the balls 92. This is to allow the balls 92 to also move in the radial direction by the centrifugal force acting on the balls 92 during rotation of the rotating tub 12.

Moreover, in the present embodiment, the race 90a has a lower surface that slopes upward in a radial outer direction, and the outer circumferential surface of the race 90a has a diameter larger than that of the balls 92. This is to allow the balls 92 to move in the radial outer direction along the lower surface of the race 90a, that is, a sloping surface, only when the centrifugal force acting on the balls 92 exceeds a certain level.

The balls 92 are formed of spherical metal and are disposed to be movable in the circumferential direction of the rotating tub 12 along the race 901a to offset the unbalanced load generated in the rotating tub 12 due to unbalance of laundry when the rotating tub 12 rotates. When the rotating tub 12 rotates, the balls 92 move along the race 90a and perform a balancing function on the rotating tub 12.

The viscous oil 93 is filled in the race 90a to have an oil surface lower than the diameter of the balls 92. In the present embodiment, the amount of the viscous oil 93 filled in the race 90a is set such that the balls 92 may be completely submerged in the viscosity oil 93 in a state in which the viscosity oil 93 and the balls 92 have been moved in the radial direction by the centrifugal force.

The lace 90a is provided with a width that is relatively larger than a depth thereof. In the embodiment, since the lower surface of the lace 90a is inclined, the width of the lace 90a is relatively larger than the average depth of the lace 90a. When the width and the depth of the race 90a are formed as described above, the width of the viscous oil 93 moved in the radial direction by the centrifugal force is larger than the height of the viscous oil 93 for when the viscous oil 93 is filled in the lower portion of the race 90a by its own weight. In addition, upper sides of the balls 92 supported on the lower surface of the race 90a by its own weight protrude over the upper side of the oil surface of the viscous oil 93, while the balls moved in the radial direction by the centrifugal force are completely submerged in the viscous oil 93.

In a case in which the race 90a and the viscous oil 93 are configured as described above, when the rotating tub 30 rotates at a low velocity and the centrifugal force acting on the balls 92 is weak, the balls 92 remain at the radial inner side of the race 90a within the race 90a. In this state, the upper sides of the balls 92 are exposed to the outside of the viscous oil 93, and a viscosity force applied to the balls 92 is relatively weak and thus the balls 92 may move in the circumferential direction.

Meanwhile, the ball balancer 90 may be installed on at least one of the upper side or the lower side of the rotating tub 12, and the following description will be made in relation that the ball balancer 90 is installed on the upper side of the rotating tub 12 as an example.

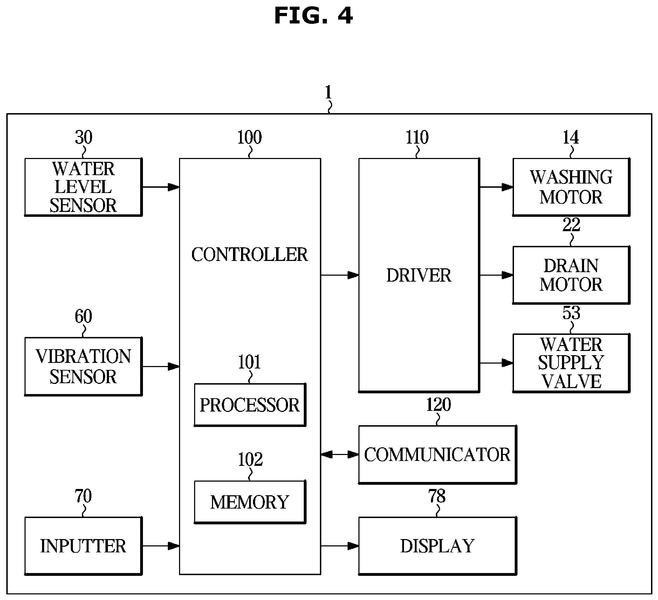

FIG. 4 is a control block diagram illustrating a washing machine 1 according to an embodiment.

Referring to FIG. 4, the washing machine 1 according to an embodiment includes an inputter 70, a display 78, a driver 110, a communicator 120, and a controller 100 including a processor 101 and a memory 102.

The controller 100 may include the memory 102 that stores a program for executing operations described below and various types of data, and the processor 101 that processes data by executing the program stored in the memory 102.

The memory 102 may store a vibration limit value at a time of leveling (a value basically input when the set is shipped) set in the washing machine 1, a vibration limit value reset through an installing mode after an initial installation (or installation after movement) of the washing machine 1, and a rotation velocity in a unique resonance band of the washing machine 1.

In addition, the memory 102 may store control data for controlling of operations of the washing machine 1, reference data used in controlling operations of the washing machine 1, operation data generated during the performance of a predetermined operation of the washing machine 1, setting information, such as setting data input by the inputter 70 for the washing machine 1 to perform a predetermined operation, times when the washing machine 1 has performed a specific operation, use information including model information of the washing machine, and malfunction information including the cause or location of a malfunction.

The memory 102 may include at least one of a volatile memory 102, such as a Static Random Access Memory (S-RAM), D-RAM, etc., or a non-volatile memory 102, such as a flash memory 102, a read only memory (ROM), an erasable programmable read only memory (EPROM), electrically erasable programmable read only memory (EEPROM), and the like.

The non-volatile memory 102 may operate as an auxiliary storage device of the volatile memory 102, and may keep stored data even when power of the washing machine 1 is cut off. For example, the non-volatile memory 102 may store a control program and control data for controlling of operations of the washing machine 1.

Unlike the non-volatile memory 102, the volatile memory 102 may lose stored data when power of the washing machine 1 is cut off. The volatile memory 102 may load the control programs and control data from the non-volatile memory 102 and temporarily store the loaded control programs and control data, or temporarily store set values or control commands input through the inputter 70, or temporarily store control signals output from the processor 101 and the like.

The processor 101 may process data or output a control signal according to a program stored in the memory 102.

The processor 101 and the memory 102 may be provided in a single component or in multiple components depending on the capacities thereof. In addition, the processor 101 and the memory 102 may be physically separated from each other or may be provided as a single chip.

The inputter 70, which inputs commands to perform a washing cycle, a rinsing cycle, and a dehydrating cycle of the washing machine 1 by a manipulation of a user, may include keys, buttons, switches, a touch pad, and the like, and may include all types of devices generating preset input data by a manipulation, such as press-in, contact, pressure, and rotation.

In addition, the inputter 70 includes a plurality of buttons (power-on, reservation, washing, rinsing, dehydrating, water level selection, etc.) to input user commands related to operations of the washing machine 1. The plurality of buttons include a course selecting button to select a washing course (washing courses including a standard course, a wool course, a boiling course, etc.) according to the type of laundry loaded into the washing machine 1.

The controller 100 is a microcomputer to control overall operations of the washing machine 1, such as washing, rinsing, and dehydrating, according to operating information input from the inputter 70, and may set the amount of washing water (a target water level for washing), the amount of rinsing water (a target water level for rinsing), a target RPM, a motor operating rate (an ON time and an OFF time of the washing motor 14), a time for washing, and a time for rinsing according to the weight (load) of the laundry in the selected washing course.

In addition, the controller 100 may be configured to, based on a washing cycle or a rinsing cycle being ended, drive the drain motor 22; based on a level of the water in the tub 11 reaching a first water level, drive the washing motor 14 such that the rotating tub 12 is rotated at a predetermined velocity for a first period of time; and based on the first period of time elapsing, stop the washing motor 14 and the drain motor 22.

Here, the first water level may vary depending on the mass of a vibrating system and specifications (stiffness and damping) of a damper used in the washing machine. Specifically, a required amount of residual water may vary according to the mass of the vibrating system and the damper specifications (stiffness and damping), and accordingly, the first water level may be derived through an experiment based on the specifications of the washing machine.

For example, the washing machine according to an embodiment may determine, as the first water level, a level of about 12L at a time when the rotating tub starts to move at 0 rpm.

Thereafter, the washing machine may, based on the washing motor 14 being stopped, drive the drain motor 22 for a second period of time.

In this case, since the washing motor 14 may require a longer time to stop in comparison with the drain motor 22 due to inertia, the drain motor 22 may stand by in a stopped state while the washing motor 14 is being stopped.

Thereafter, the controller 100 may, upon the second period of time elapsing, stop the drain motor 22 and based on the washing motor 14 and the water drain motor 22 being stopped, drive the washing motor 14 and the water drain motor 22 according to a dehydrating profile.

Specifically, the controller 100 may, based on the water level in the tub 11 in a process of entering the dehydrating cycle reaching the first water level, drive the washing motor 14 to rotate the rotating tub 12 at a predetermined velocity for the first period of time.

In this case, since the controller 100 drives the washing motor 14 while in operation of the drain motor 22, vibrations generated from drainage of water may perform a ball release cycle in which balls inside the ball balancer are released. Specifically, the controller 100 may, upon the balls being located at the same side as the eccentricity when entering a dehydrating cycle, allow the balls to be located at a side opposite to the unbalance position to pass through an initial low-RPM region (e.g., lower than or equal to 100 RPM) in the early stage of dehydrating and perform normal dehydrating.

The controller may, in order to pass through the low-RPM region in the early stage of dehydrating, primarily use the weight of residual water, and maintain a RPM higher than or equal to a resonance RPM (e.g., 80 RPM) for a certain period of time such that the balls are located to a side opposite to the unbalance position.

In this case, in order to move the balls in a direction opposite to the unbalance position, vibrations of the tub need to become stronger but the residual water retained in the tub may prevent the balls from moving. Accordingly, the controller 100 may perform drain for the first period of time without stopping the drain motor to reduce the weight of the tub and increase the amount of vibration, so that the balls may be effectively moved in a direction opposite to the unbalance position.

Thereafter, the controller 100 may determine a velocity higher than a rotation velocity in a predetermined resonance band of the rotating tub 12 as a predetermined velocity for ball balancing for the first period of time.

The controller 100 determines the first period of time based on the position of unbalance of the rotating tub 12. The controller 100 may determine, as the first period of time, a time required to compensate for unbalance by a vector sum of the mass and the position of balls inside the ball balancer as the balls are located at a phase opposite to the unbalance position.

That is, the controller 100 may rotate the rotating tub 12 at an RPM higher than the resonance point for the first period of time to move the balls in the direction opposite to the unbalance position. Accordingly, in a subsequent dehydrating cycle, the balls are located in a direction opposite to the unbalance position, thereby compensating for the imbalanced mass and minimizing vibration and noise.

Thereafter, the controller 100 may determine the second period of time based on the water level measured by the water level sensor 30 after the washing motor 14 is stopped. Specifically, the controller 100 may drive the drain motor 22 after the washing motor 14 is stopped, and based on the water level in the tub 11 not reaching the second water level, increase the second period of time.

That is, the controller 100 may, based on the water level in the tub 11 not reaching the second water level even with the second period of time that is determined based on the water level in the tub after the ball balancing is performed, identify that foams are not sufficiently discharged and thus increase the second period of time.

However, the determining of the second period of time by the controller may represent a case in which a component for drainage is defective and thus proper drainage is not achieved.

Therefore, in a normal state in which water is smoothly drained, residual water may not be present in the tub when the washing motor is stopped. Accordingly, the second water level may not be detected, or the second period of time may be adjusted by sensing the water level at predetermined time intervals during operation of the drain motor.

The driver 76 may drive the washing motor 14 and the drain motor 22 related to the operation of the washing machine 1 and turn on/off the water supply valve 53 according to a driving control signal from the controller 100.

The display 78 may display the operating state of the washing machine 1 and the manipulation state of the user according to a display control signal of the controller 100.

Hereinafter, operations and effects of a washing machine having a ball balancer according to an embodiment and a method of controlling the washing machine will be described.

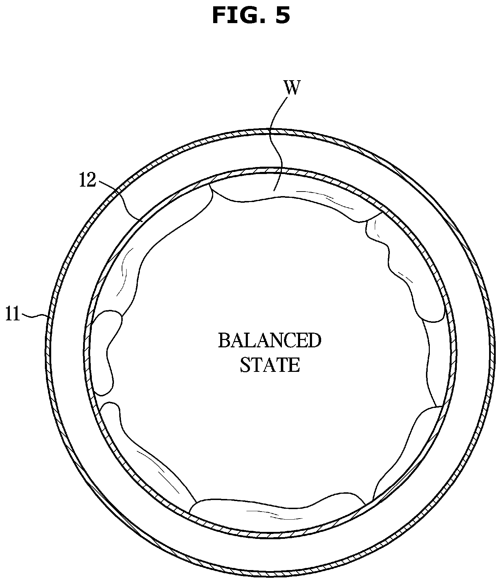

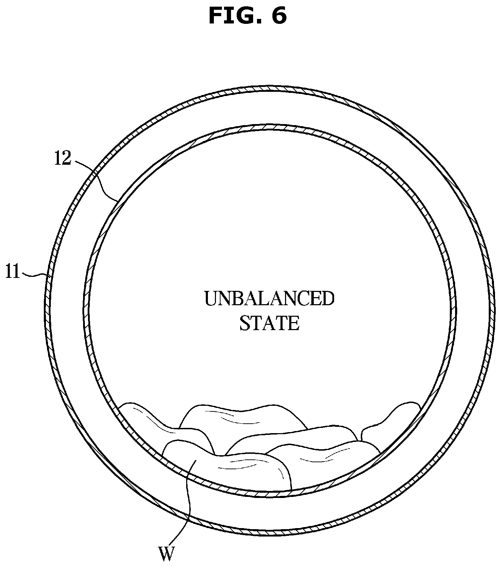

FIG. 5 is a diagram illustrating a balanced state of laundry inside a rotating tub in a general washing machine, and FIG. 6 is a diagram illustrating an unbalanced state of laundry inside a rotating tub in a general washing machine.

In general, the washing machine 1 is a device that performs washing on laundry using movement of laundry W and a water current generated by rotating of the rotating tub 12 as the washing motor 14 is driven. In a dehydrating cycle, the rotating tub 12 rotates at a high velocity of 700 rpm to 1000rpm, and vibrations and noise are generated. The vibrations and noise during the dehydrating cycle greatly vary depending on distribution of laundry immediately before the dehydrating cycle.

Referring to FIG. 5, in a balance state in which the laundry W is evenly distributed on the inner wall of the tub 12, vibrations or noise may not occur in the tub 11 even when the rotating tub 12 is rotated at a high velocity for dehydrating cycle.

However, as illustrated in FIG. 6, in an unbalanced state in which the laundry W is not evenly distributed in the rotating tub 12, when the rotating tub 12 is rotated at a high velocity for dehydrating cycle, an unbalance load generated by the unbalance of the laundry W may cause a one-sided force to be applied to the rotating shaft of the rotating tub 12, and thus the rotating tub 12 are allowed to eccentrically move and great vibrations occur in the tub 11 and thus noise is generated.

Accordingly, in an embodiment, the rotating tub 12 is provided on the upper side thereof with a ball balancer 90 offsetting the unbalanced load generated by the unbalance of the laundry W (see FIG. 1) to stabilize the rotation of the rotating tub 12.

In the ball balancer 90, when an unbalance load is generated by unbalance of the laundry W during rotation of the rotating tub 12, the balls 92 inside the balancer housing 91move in the circumferential direction of the rotating tub 12 to a position symmetrical to a place at which the unbalance load is generated. In this case, the balls 92 are opposed to the unbalanced load, and thus suppress vibrations of the tub 11 generated by the unbalanced load.

In the dehydrating cycle, since the laundry W remains wet inside the rotating tub 12, an unbalance phenomenon is highly likely to occur. Therefore, in order to suppress the vibrations of the tub 11 in an early stage entering the dehydrating, the ball balancer 90 needs to balance the rotating tub 12 within a short time when the dehydrating cycle starts.

When the dehydrating rotation of the rotating tub 12 starts as the washing motor 14 is driven, the rotation velocity of the rotating tub 12 begins to increase.

In the early stage entering the dehydrating process, since the viscous oil 93 filled inside the ball balancer 90 may not push the balls 92 upward so that the balls 92 inside the ball balancer 90 may move while colliding with the inner wall of the balancer housing 91 or colliding with each other, so there is a difference in rotation velocities between the balls 92 and the rotating tub 12.

Due to the difference in rotation velocities between the rotating tub 12 and the balls 92, a resonance point occurs in which the tub 11 vibrates excessively.

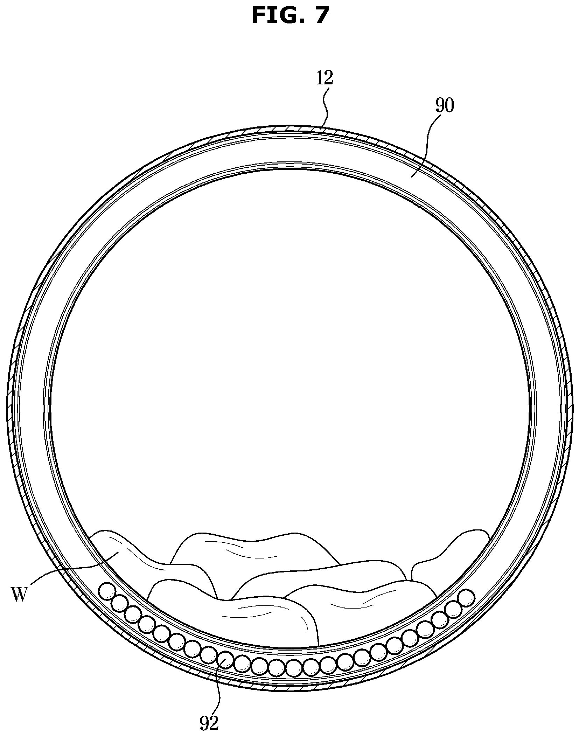

When the laundry W is unbalanced, vibrations of the tub 11 become worse before the balls 92 reaches a balance position (a position at which balls are positioned opposite to the laundry "W"). Accordingly, the balls 92 to suppress vibrations in the early stage entering the dehydrating process rather cause excessive vibrations of the tub 11 together with the washing machine W. Details thereof will be described with reference to FIGS. 7 to 10.

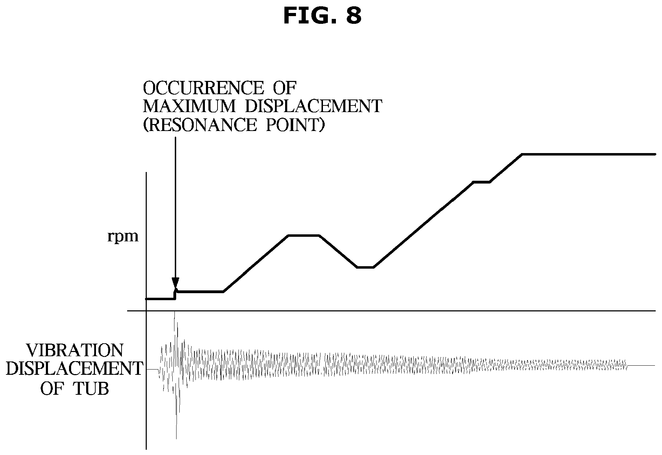

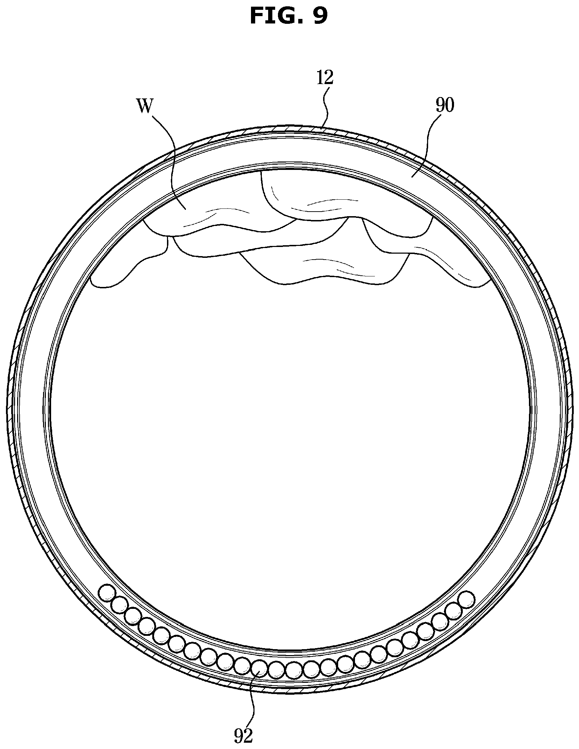

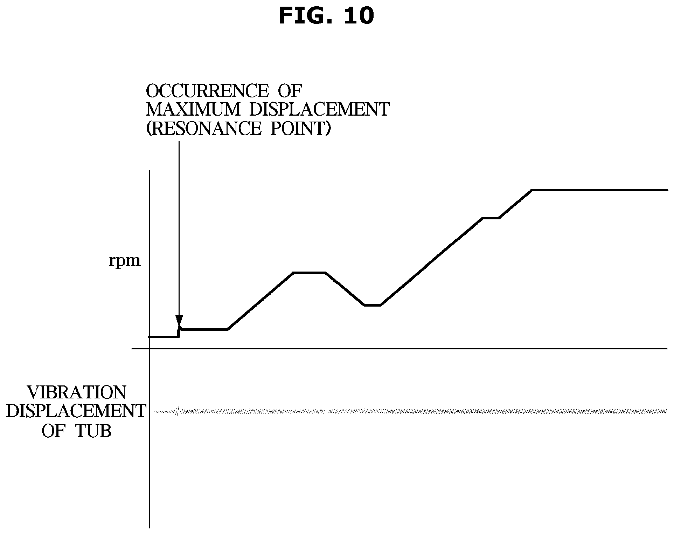

FIG. 7 is a diagram illustrating a case in which balls and laundry are at the same phase in a washing machine having a ball balancer according to an embodiment, FIG. 8 is a diagram illustrating a rotation velocity of a washing motor and a vibration displacement of a tub in a case of FIG. 7, FIG. 9 is a diagram illustrating a case in which balls and laundry are at the opposite phases in a washing machine having a ball balancer according to an embodiment, and FIG. 10 is a diagram illustrating a rotation velocity of a washing motor and a vibration displacement of a tub in a case of FIG. 9.

As illustrated in FIG. 7, when the balls 92 inside the ball balancer 90 are positioned at the same phase (the same position) as that of the unbalanced load generated by unbalance of the laundry W, the vibration displacement of the tub 11 may be maximally generated while passing the resonance point in the early stage entering the dehydrating process, as illustrated in FIG. 8.

When a gap distance between the tub 11 and the frame of the washing machine 1 is not sufficient, the tub 11 may strike the frame of the washing machine 1 and apply a shock to the main body 10, resulting in failure of dehydration in which the dehydrating cycle may not be performed.

On the other hand, as illustrated in FIG. 9, when the balls 92 inside the ball balancer 90 are positioned at a phase (the opposite phase) opposite to that of the unbalanced load generated by the unbalance of the laundry W, the vibration displacement of the tub 11 may not be greatly generated even when passing the resonance point in the early stage of entering the dehydrating process because the unbalance load is not great, as illustrated in FIG. 10.

Accordingly, in a dehydrating cycle in which unbalance is highly likely to occur, a dehydrating cycle capable of releasing the balls 92 inside the ball balancer 90 before passing through the resonance point and reducing the vibrations of the tub 11 is required.

To this end, the washing machine according to an embodiment may locate the balls to a position opposite to the unbalance even when the rotating tub 12 is rotated at a high velocity in an unbalanced state (see FIG. 6) in which the laundry W is not evenly distributed in the rotating tub 12.

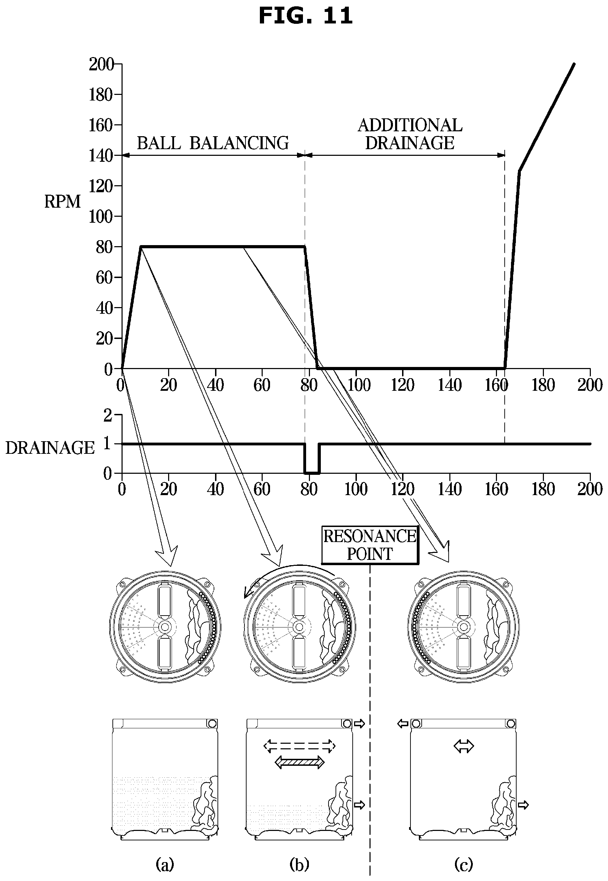

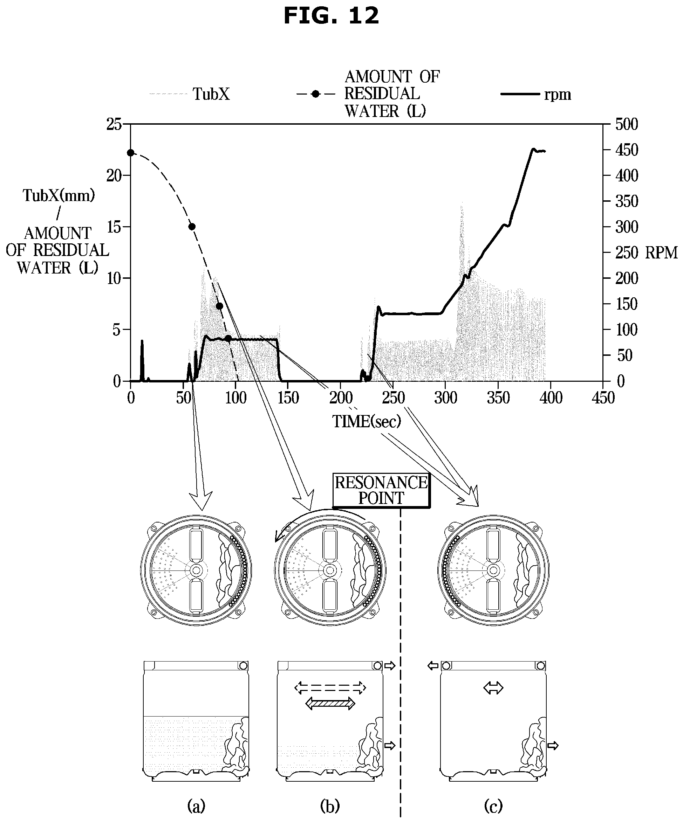

In addition, the washing machine according to an embodiment may determine an additional drainage time afterward, to prevent foam confinement from occurring. Details thereof will be described with reference to FIGS. 11 and 12.

FIGS. 11 is graphs showing a ball balancing and an additional drainage in a washing machine 1 according to an embodiment.

In FIGS. 11, a graph showing a method of controlling vibrations in a dehydrating cycle in a washing machine 1 according to an embodiment is illustrated, the controller 100 may curb ball concentration when entering a dehydrating cycle, and through an additional drainage time subsequent to the ball balancing, prevent foam confinement from occurring.

The controller 100 may, when entering the dehydrating cycle, drive the drain motor 22to drain the water to a certain water level. In this process, since the controller 100 is driving the washing motor 14, the RPM of the rotating tub 12 may be maintained at 80 RPM.

In this case, the controller 100 maintains the washing motor 14 at 80 RPM based on experimental data, to locate the balls of the ball balancer at a phase opposite to the unbalance position while generating less foam.

The controller 100 needs to set the rotation RPM for ball balancing to a level appropriately higher than the resonance RPM in order to suppress excessive generation of foams in consideration that the amount of foam generation is proportional to the rotational RPM of the rotating tub 12.

Accordingly, the controller 100 may set the ball balancing RPM to 80 RPM such that the balls of the ball balancer are located at the phase opposite to the unbalance position while generating less foam.

FIG. (a) of 11 represents a state in which the washing or rinsing cycle is completed. Since a ball balancing process is performed when entering a dehydrating, the controller 100 does not need to identify the exact positions of the balls.

However, in FIG. (a) of 11, assumed is a case in which the balls are located at the same position as the phase of unbalance when the washing or rinsing cycle is completed, and thus vibration and noise during dehydrating are the largest.

Referring to FIG. (b) of 11, the controller 100 may, when entering dehydrating, increase the RPM of the rotating tub 12 to 80RPM for ball balancing.

As for a full automatic washing machine 1 with an 25-inch, the primary resonance (pendulum) occurs at about 54rpm to 60 rpm, and in order to locate the balls at the phase opposite to the imbalanced mass, the RPM of the rotating tub 12 needs to be higher than the resonance RPM.

Accordingly, the controller 100 may, in order to smoothly perform ball balancing while lowering the possibility of foam confinement, increase the RPM of the rotating tub 12 to 80 RPM and maintain the RPM as shown in FIG. (b) of 11.

Thereafter, referring to FIG. (c) of 11, since the controller 100 has maintained the RPM of the rotating tub 12 at 80 RPM (beyond the resonance point) for a certain period of time, the balls inside the ball balancer may be located at the phase opposite to the unbalance position.

However, in a process of performing the ball balancing, residual water present in the tub 11 may cause foam to be generated by detergent during rotation of the rotating tub 12. In this case, depending on the amount of detergent used by the user and the components of the detergent, excessive foaming, that is, foam confinement, may occur.

Accordingly, as the rotating tub 12 rotates at a high velocity, the amount of foam generated further increases, and the viscous friction of the foam generated between the tub 11 and the rotating tub 12 may cause an overload to be detected in the motor and thus normal dehydrating may not be achieved.

However, in order to resolve such an issue in the washing machine 1 according to an embodiment, the controller 100 may set an additional drainage time (e.g., 80 seconds) after the ball balancing cycle is performed.

In this case, the foam confinement may be prevented from occurring by allocating an additional drainage time in a state in which the motor is completely stopped after the ball balancing, in addition to properly setting the balancing RPM using the characteristics that the amount of foam generation, which is the cause of foam confinement, is proportional to the RPM of the rotating tub 12.

FIG. 12 are graphs showing the amount of residual water, a vibration of a tub 11, and a rotation velocity of a washing motor 14 over time in a washing machine according to an embodiment;

Similar to FIGS. 11 FIG. (a) of 12 represents a state in which the washing or rinsing cycle is completed, and illustrates a case in which the balls are located at the same position as the phase of unbalance when the washing or rinsing cycle is completed, and thus vibration and noise during dehydrating are the largest.

When entering a state of FIG. (b) of 12 from a state of FIG. (a) of 12, the drain motor 22 is operating after the first water level is reached, and thus the amount of residual water may continuously decrease.

In addition, since the controller 100 allows the washing motor 14 to operate while the drain motor 22 operates, irregular vibrations may occur in the tub 11 due to a change in the amount of residual water in a process of residual water being drained, and thus a ball release cycle in which the balls inside the balancer are released may be performed.

Then, the controller 100 may increase the RPM of the rotating tub 12 up to 80 rpm for ball balancing. In this case, since the balls inside the ball balancer have been released to be movable, and the RPM is maintained at 80 RPM that exceeds the resonance point (54RPM to 60 RPM based on the 25-inch full automatic washing machine 1), the ball balancing cycle may be performed.

Accordingly, as shown in FIG. (c) of 12, there is no residual water in the tub 11, and the controller 100 may control the washing machine 1 for the balls inside the ball balancer to be located at the phase opposite to the unbalance position.

The controller 100 may, while the balls inside the ball balancer are located at the phase opposite to the unbalance position, stop the washing motor 14 and the drain motor 22 and then drive only the drain motor 22 to perform an additional drainage for a time of about 140 seconds to 220 seconds.

In this case, since balls of the ball balancer inside the washing machine 1 have been already located at the phase opposite to the unbalance by the ball balancing cycle, the controller 100 may, after the additional drainage, proceed with a dehydrating cycle according to a dehydrating profile input by the inputter 70.

The washing machine 1 according to the conventional art is implemented to, when entering a dehydrating, drain water after reaching an RPM, which is sufficiently higher than the resonance point, while residual water is present in the rotating tub 12, and thus detergent inside the rotating tub 12 may excessively generate foam.

On the other hand, unlike the conventional art, the washing machine 1 according to an embodiment is implemented to drain water in a process of reaching the resonance point, and has an additional drainage time even after reaching the resonance point, so that generation of form inside the rotating tub 12 may be minimized.

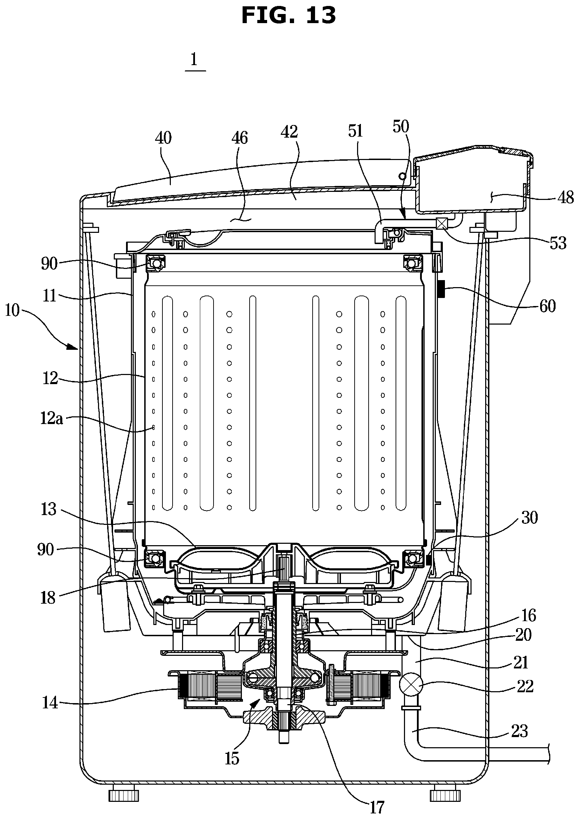

FIG. 13 is a cross-sectional view illustrating a configuration of a washing machine having a ball balancer according to another embodiment.

In FIG. 13, a washing machine 1 according to another embodiment may include a ball balancer 90 provided on a lower side of a rotating tub 12.

In a case in which the ball balancer 90 is provided on the lower side of the rotating tub 12, the resonance point at which excessive vibrations of the tub 11 occur becomes higher (to a level higher than or equal to 80 rpm) in comparison with a case in which the ball balancer 90 is provided on the upper side of the rotating tub 12, the rotation velocity of the washing motor 14 may be set to a velocity higher than a predetermined velocity.

In addition, when the ball balancer 90 is installed on the lower side of the rotating tub 12, the balancing of the rotating tub 12 may be achieved more rapidly than when the ball balancer 90 is installed on the upper side of the rotating tub 12. Therefore, the driving time of the washing motor 14 may be set to a time shorter than the first period of time and perform the ball release cycle of releasing the balls 92 inside the ball balancer 90.

Other algorithms than those described above are the same as the case in which the ball balancer is located on the upper side, so the same descriptions will be omitted below.

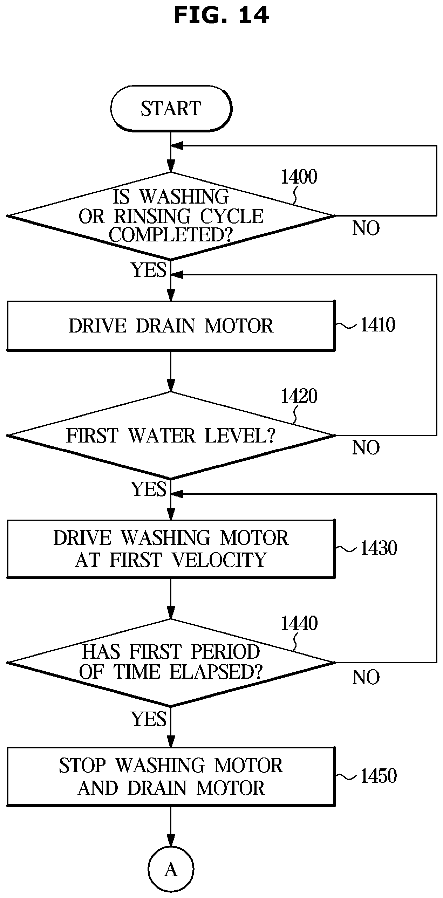

FIG. 14 is a flowchart showing a method of controlling a washing machine according to an embodiment.

Referring to FIG. 14, the controller 100 of the washing machine 1 according to an embodiment may identify whether a washing or rinsing cycle is completed according to a washing or rinsing cycle profile input by a user (1400).

Thereafter, the controller 100 may, upon identifying that the washing or rinsing cycle is completed and the operation enters a dehydrating cycle (YES in operation 1400), drive the drain motor 22 (1410).

The controller 100 may drive the drain motor 22 to drain the water in the tub 11, and identify whether the water level in the tub 11 reaches the first water level, which is a preset value, by the water level sensor 30 provided in the washing machine 1 (1420).

The controller 100 may, upon identifying that the water level in the tub 11 has not reached the first water level as water is drained to the outside of the washing machine 1 by the driving of the drain motor 22 (NO in operation 1420), continue draining water and stand by.

The controller 100 may, upon identifying that the water level in the tub 11 has reached the first water level as water is drained to the outside of the washing machine 1 by the driving of the drain motor 22 (YES in operation 1420), drive the washing motor 14 at a predetermined velocity (1430).

In this case, the reason for the controller 100 driving the washing motor 14 at a predetermined velocity is to perform a ball releasing cycle and a ball balancing cycle, and the predetermined velocity may be a velocity (e.g., 80 RPM)at which foam confinement is unlikely to occur and the ball balancing is smoothly performed.

Thereafter, the controller 100 may drive the washing motor 14 at the predetermined velocity for a first period of time, and the controller 100 may identify whether the first period of time has elapsed (1440).

Upon identifying that the first period of time has elapsed (YES in operation 1440), the controller stops the washing motor 14 and the drain motor 22 (1450).

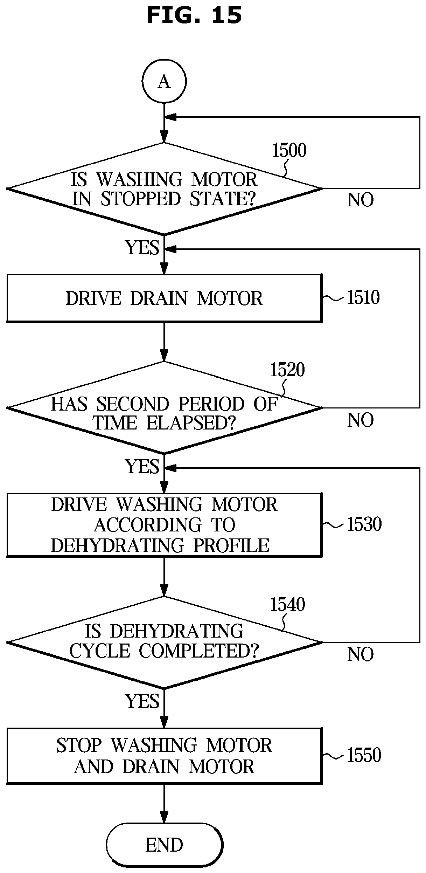

This may be to perform an additional drainage time as shown in FIG. 15 for the controller 100 to prevent foam confinement, in which case the ball balancing cycle may be already completed, and the balls inside the ball balancer may be located at a phase opposite to the unbalance position.

FIG. 15 is a flow chart showing a method of controlling a washing machine 1 according to an embodiment, which is subsequent to FIG. 14.

Referring to FIG. 15, the controller 100 may identify whether the washing motor 14 and the drain motor 22 are in a stopped state, and the washing motor 14 is in a stopped state (1500).

That is, since foam is no longer generated and discharged to the outside only by performing an additional drainage in a state in which the washing motor 14 is stopped, the controller 100 may identify whether the washing motor 14 is in a stopped state.

Thereafter, the controller 100 may, upon identifying that the washing motor 14 is in a stopped state (YES in operation 1500), drive the drain motor 22 (1510).

The controller 100 may set an additional drainage time for which foam is discharged to the outside of the washing machine 1 by driving the drain motor 22, and may identify whether a second period of time, which is the additional drainage time, has elapsed (1520).

The controller 100 may, upon identifying that the second period of time has elapsed (YES in operation 1520), identify that the foam, which is the cause foam confinement, has been sufficiently discharged to the outside, and drive the washing motor 14 according to a dehydrating profile input by the user(1530).

Thereafter, the controller 100 may identify whether the dehydrating cycle is completed (1540), and upon identifying that the dehydrating cycle is completed (YES in operation 1540), stop the washing motor 14 and the drain motor 22 (1550) to terminate the washing.

As described above, with the method of controlling the washing machine 1 according to an embodiment, vibration and noise may be minimized even in an unbalance situation in which the center of mass of laundry does not coincide with the center of the rotating shaft, and also foam confinement may be prevented by the additional draining time, thereby preventing failure of the washing machine 1 while improving durability.

Meanwhile, the present embodiment has been described in relation to a full automatic washing machine with a vertical shaft as an example, but the invention is not limited thereto and the same object and effect may be achieved in a drum type washing machine with a horizontal shaft.

## Claims

1. A washing machine (1) comprising:
a tub (11) provided to accommodate water therein;
a rotating tub (12) rotatably installed inside the tub;
a ball balancer (90) provided in the rotating tub;
a washing motor (14) configured to rotate the rotating tub;
a drain motor (22) configured to drain water from the tub; and
a controller (100) configured to:
based on a washing cycle or a rinsing cycle being ended, drive the drain motor (22);
based on a level of the water in the tub (11) reaching a first water level, drive the washing motor (14) for a first period of time; and
based on the first period of time elapsing, stop the washing motor (14) and the drain motor (22);
wherein the controller (100) is configured to determine the first period of time based on an unbalance position of the rotating tub (12).

2. The washing machine of claim 1, wherein the controller (100) is configured to, based on the washing motor (14) being stopped, drive the drain motor (22) for a second period of time.

3. The washing machine of claim 2, wherein the controller (100) is configured to, based on the second period of time elapsing, stop the drain motor (22), and based on the washing motor (14) and the drain motor (22) being stopped, drive the washing motor (14) and the drain motor (22) according to a dehydrating profile.

4. The washing machine of claim 2, wherein the controller (100) is configured to drive the washing motor (14) for the first period of time at a velocity higher than a rotation velocity in a predetermined resonance band of the rotating tub.

5. The washing machine of claim 1, wherein the controller (100) is configured to determine, as the first period of time, a time required to compensate for unbalance by a vector sum of a mass and a position of balls inside the ball balancer (90) as the balls are located at a phase opposite to the unbalance position.

6. The washing machine of claim 2, further comprising a water level sensor (30),
wherein the controller (100) is configured to control the water level sensor to measure the level of water in the tub (11) after the washing motor (14) is stopped.

7. The washing machine of claim 6, wherein the controller (100) is configured to determine the second period of time based on the level of water measured by the water level sensor (30) after the washing motor (14) is stopped.

8. The washing machine of claim 7, wherein the controller (100) is configured to drive the drain motor (22) after the washing motor (14) is stopped, and
based on the level of water in the tub (11) not reaching a second water level within the second period of time, increase the second period of time.

9. The washing machine of claim 2, wherein the controller (100) is configured to, based on the level of water in the tub (11) reaching the first water level in a process of entering a dehydrating cycle, drive the washing motor (14) for the first period of time.

10. A method of controlling a washing machine (1), the method comprising:
based on a washing cycle or a rinsing cycle being ended, driving a drain motor (22);
based on a level of the water in a tub (11) reaching a first water level, driving a washing motor (14) for a first period of time; and
upon the first period of time elapsing, stopping the washing motor and the drain motor;
wherein determining the first period of time is based on an unbalance position of a rotating tub (12) rotatably installed inside the tub.

11. The method of claim 10, further comprising,
based on the washing motor (14) being stopped, driving the drain motor (22) for a second period of time.

12. The method of claim 11, further comprising:
at a time in which the second period of time has elapsed, stopping the drain motor (22); and based on the washing motor (14) and the drain motor (22) being stopped, driving the washing motor (14) and the drain motor (22) according to a dehydrating profile.

13. The method of claim 11, further comprising:
driving the washing motor (14) for the first period of time at a velocity higher than a rotation velocity in a predetermined resonance band of the rotating tub (12).

## Patentansprüche

1. Waschmaschine (1), umfassend:
eine Wanne (11), die bereitgestellt ist, um Wasser darin aufzunehmen;
eine Drehwanne (12), die drehbar innerhalb der Wanne installiert ist;
einen Kugelausgleicher (90), der in der Drehwanne bereitgestellt ist;
einen Waschmotor (14), der dazu konfiguriert ist, die Drehwanne zu drehen;
einen Ablassmotor (22), der dazu konfiguriert ist, Wasser aus der Wanne abzulassen; und
eine Steuerung (100), die zu Folgendem konfiguriert ist:
basierend darauf, dass ein Waschzyklus oder ein Spülzyklus beendet wird, Antreiben des Ablassmotors (22);
basierend darauf, dass ein Pegel des Wassers in der Wanne (11) einen ersten Wasserpegel erreicht, Antreiben des Waschmotors (14) für eine erste Zeitdauer; und
basierend darauf, dass die erste Zeitdauer verstreicht, Stoppen des Waschmotors (14) und des Ablassmotors (22);
wobei die Steuerung (100) dazu konfiguriert ist, die erste Zeitdauer basierend auf einer Nichtausgleichsposition der Drehwanne (12) zu bestimmen.

2. Waschmaschine nach Anspruch 1, wobei die Steuerung (100) dazu konfiguriert ist, basierend darauf, dass der Waschmotor (14) gestoppt wird, den Ablassmotor (22) für eine zweite Zeitdauer anzutreiben.

3. Waschmaschine nach Anspruch 2, wobei die Steuerung (100) dazu konfiguriert ist, basierend darauf, dass die zweite Zeitdauer verstreicht, den Ablassmotor (22) zu stoppen und basierend darauf, dass der Waschmotor (14) und der Ablassmotor (22) gestoppt werden, den Waschmotor (14) und den Ablassmotor (22) gemäß einem Entwässerungsprofil anzutreiben.

4. Waschmaschine nach Anspruch 2, wobei die Steuerung (100) dazu konfiguriert ist, den Waschmotor (14) für die erste Zeitdauer mit einer Geschwindigkeit anzutreiben, die höher als eine Drehgeschwindigkeit in einem vorbestimmten Resonanzband der Drehwanne ist.

5. Waschmaschine nach Anspruch 1, wobei die Steuerung (100) dazu konfiguriert ist, als die erste Zeitdauer eine Zeit zu bestimmen, die erforderlich ist, um Nichtausgleich durch eine Vektorsumme einer Masse und einer Position von Kugeln innerhalb des Kugelausgleichers (90) zu kompensieren, wenn sich die Kugeln in einer Phase entgegengesetzt zu der Nichtausgleichsposition befinden.

6. Waschmaschine nach Anspruch 2, ferner umfassend einen Wasserpegelsensor (30),
wobei die Steuerung (100) dazu konfiguriert ist, den Wasserpegelsensor zu steuern, um den Wasserpegel in der Wanne (11) zu messen, nachdem der Waschmotor (14) gestoppt ist.

7. Waschmaschine nach Anspruch 6, wobei die Steuerung (100) dazu konfiguriert ist, die zweite Zeitdauer basierend auf dem Wasserpegel zu bestimmen, der durch den Wasserpegelsensor (30) gemessen wird, nachdem der Waschmotor (14) gestoppt ist.

8. Waschmaschine nach Anspruch 7, wobei die Steuerung (100) dazu konfiguriert ist, den Ablassmotor (22) anzutreiben, nachdem der Waschmotor (14) gestoppt ist, und
basierend darauf, dass der Wasserpegel in der Wanne (11) keinen zweiten Wasserpegel innerhalb der zweiten Zeitdauer erreicht, die zweite Zeitdauer zu erhöhen.

9. Waschmaschine nach Anspruch 2, wobei die Steuerung (100) dazu konfiguriert ist, basierend darauf, dass der Wasserpegel in der Wanne (11) den ersten Wasserpegel in einem Prozess des Eintretens in einen Entwässerungszyklus erreicht, den Waschmotor (14) für die erste Zeitdauer anzutreiben.

10. Verfahren zum Steuern einer Waschmaschine (1), wobei das Verfahren Folgendes umfasst:
basierend darauf, dass ein Waschzyklus oder ein Spülzyklus beendet wird, Antreiben eines Ablassmotors (22);
basierend darauf, dass ein Pegel des Wassers in einer Wanne (11) einen ersten Wasserpegel erreicht, Antreiben eines Waschmotors (14) für eine erste Zeitdauer; und
wenn die erste Zeitdauer verstreicht, Stoppen des Waschmotors und des Ablassmotors;
wobei das Bestimmen der ersten Zeitdauer auf einer Nichtausgleichsposition einer Drehwanne (12) basiert, die drehbar innerhalb der Wanne installiert ist.

11. Verfahren nach Anspruch 10, ferner umfassend,
basierend darauf, dass der Waschmotor (14) gestoppt wird, Antreiben des Ablassmotors (22) für eine zweite Zeitdauer.

12. Verfahren nach Anspruch 11, ferner umfassend:
zu einer Zeit, in der die zweite Zeitspanne verstrichen ist, Stoppen des Ablassmotors (22); und basierend darauf, dass der Waschmotor (14) und der Ablassmotor (22) gestoppt werden, Antreiben des Waschmotors (14) und des Ablassmotors (22) gemäß einem Entwässerungsprofil.

13. Verfahren nach Anspruch 11, ferner umfassend:
Antreiben des Waschmotors (14) für die erste Zeitdauer mit einer Geschwindigkeit, die höher als eine Drehgeschwindigkeit in einem vorbestimmten Resonanzband der Drehwanne (12) ist.

## Revendications

1. Machine à laver (1) comprenant :
une cuve (11) prévue pour recevoir de l'eau dans celle-ci ;
une cuve rotative (12) installée de manière rotative à l'intérieur de la cuve ;
un dispositif d'équilibrage à billes (90) prévu dans la cuve rotative ;
un moteur de lavage (14) conçu pour faire tourner la cuve rotative ;
un moteur de vidange (22) conçu pour vidanger l'eau de la cuve ; et
un dispositif de commande (100) conçu pour :
sur la base de la terminaison d'un cycle de lavage ou d'un cycle de rinçage, entraîner le moteur de vidange (22) ; sur la base qu'un niveau de l'eau dans la cuve (11) atteint un premier niveau d'eau, entraîner le moteur de lavage (14) pendant une première période de temps ; et
sur la base de l'écoulement de la première période de temps, arrêter le moteur de lavage (14) et le moteur de vidange (22) ;
ledit dispositif de commande (100) étant conçu pour déterminer la première période de temps sur la base d'une position de déséquilibre de la cuve rotative (12).

2. Machine à laver de la revendication 1, ledit dispositif de commande (100) étant conçu pour, sur la base de l'arrêt du moteur de lavage (14), entraîner le moteur de vidange (22) pendant une seconde période de temps.

3. Machine à laver de la revendication 2, ledit dispositif de commande (100) étant conçu pour, sur la base de l'écoulement de la seconde période de temps, arrêter le moteur de vidange (22), et sur la base de l'arrêt du moteur de lavage (14) et du moteur de vidange (22), entraîner le moteur de lavage (14) et le moteur de vidange (22) selon un profil de déshydratation.

4. Machine à laver de la revendication 2, ledit dispositif de commande (100) étant conçu pour entraîner le moteur de lavage (14) pendant la première période de temps à une vitesse supérieure à une vitesse de rotation dans une bande de résonance prédéfinie de la cuve rotative.

5. Machine à laver de la revendication 1, ledit dispositif de commande (100) étant conçu pour déterminer, en tant que première période de temps, un temps requis pour compenser le déséquilibre par une somme vectorielle d'une masse et d'une position de billes à l'intérieur du dispositif d'équilibrage à billes (90) lorsque les billes sont situées au niveau d'une phase opposée à la position de déséquilibre.

6. Machine à laver de la revendication 2, comprenant en outre un capteur de niveau d'eau (30), ledit dispositif de commande (100) étant conçu pour commander le capteur de niveau d'eau afin de mesurer le niveau d'eau dans la cuve (11) après que le moteur de lavage (14) est arrêté.

7. Machine à laver de la revendication 6, ledit dispositif de commande (100) étant conçu pour déterminer la seconde période de temps sur la base du niveau d'eau mesuré par le capteur de niveau d'eau (30) après que le moteur de lavage (14) est arrêté.

8. Machine à laver de la revendication 7, ledit dispositif de commande (100) étant conçu pour entraîner le moteur de vidange (22) après que le moteur de lavage (14) est arrêté, et
sur la base que le niveau d'eau dans la cuve (11) n'atteint pas un second niveau d'eau dans la seconde période de temps, augmenter la seconde période de temps.

9. Machine à laver de la revendication 2, ledit dispositif de commande (100) étant conçu pour, sur la base que le niveau d'eau dans la cuve (11) atteint le premier niveau d'eau dans un processus d'entrée dans un cycle de déshydratation, entraîner le moteur de lavage (14) pendant la première période de temps.

10. Procédé de commande d'une machine à laver (1), le procédé comprenant : sur la base de la terminaison d'un cycle de lavage ou d'un cycle de rinçage, l'entraînement d'un moteur de vidange (22) ;
sur la base qu'un niveau de l'eau dans une cuve (11) atteint un premier niveau d'eau, l'entraînement d'un moteur de lavage (14) pendant une première période de temps ; et
lors de l'écoulement de la première période de temps, l'arrêt du moteur de lavage et du moteur de vidange ;
ladite détermination de la première période de temps étant sur la base d'une position de déséquilibre d'une cuve rotative (12) installée de manière rotative à l'intérieur de la cuve.

11. Procédé de la revendication 10, comprenant en outre,
sur la base de l'arrêt du moteur de lavage (14), l'entraînement du moteur de vidange (22) pendant une seconde période de temps.

12. Procédé de la revendication 11, comprenant en outre :
à un moment auquel la seconde période de temps s'est écoulée, l'arrêt du moteur de vidange (22) ; et sur la base de l'arrêt du moteur de lavage (14) et du moteur de vidange (22), l'entraînement du moteur de lavage (14) et du moteur de vidange (22) selon un profil de déshydratation.

13. Procédé de la revendication 11, comprenant en outre :
l'entraînement du moteur de lavage (14) pendant la première période de temps à une vitesse supérieure à une vitesse de rotation dans une bande de résonance prédéfinie de la cuve rotative (12).
